# EUROPEAN PATENT SPECIFICATION

(11) **EP 4 067 208 B1**
(45) Date of publication and mention of the grant of the patent: **28.05.2025**
(21) Application number: 19872258.9
(22) Date of filing: 20.12.2019
(51) Int. Cl.: B62B 7/12, B62B 7/08, B62B 7/06, B60N 2/28

(54) **OPENING AND CLOSING MECHANISM FOR FRONT AND REAR LEG GROUPS OF FRAME AND CHILD SAFETY SEAT**
ÖFFNUNGS- UND SCHLIESSMECHANISMUS FÜR VORDER-UND HINTERBEINGRUPPEN EINES RAHMENS UND KINDERSICHERHEITSSITZ
MÉCANISME D'OUVERTURE ET DE FERMETURE DE GROUPES DE JAMBES AVANT ET ARRIÈRE DE CADRE ET SIÈGE DE SÉCURITÉ POUR ENFANT

(30) Priority: 29.11.2019 CN 201911202223
(43) Date of publication of application: 05.10.2022
(73) Proprietor: Zhejiang Boan Mother and Child Products Co., Ltd., Wenzhou City, Zhejiang 325200 (CN)
(72) Inventor: CHI, Ruiwei, Wenzhou Zhejiang 325200 (CN); XIAO, Gangsheng, Wenzhou Zhejiang 325200 (CN); LIU, Yunzhou, Wenzhou Zhejiang 325200 (CN)
(74) Representative: Ipside
(86) International application number: PCT/CN2019/126811
(87) International publication number: WO 2021/103221

(56) References cited:
- CN-A- 102 275 607
- CN-A- 102 275 607
- CN-A- 106 740 309
- CN-A- 107 472 343
- CN-U- 202 879 560
- CN-U- 204 687 877
- CN-U- 208 453 074
- US-A1- 2012 119 457
- US-A1- 2012 119 457
- US-A1- 2017 240 072

## Description

### Technical Field

The invention belongs to the field of child safety seats, and particularly relates to a folding and unfolding mechanism for front and rear leg assemblies of a frame and a child safety seat comprising the folding and unfolding mechanism for front and rear leg assemblies of a frame.

### Background of the Invention

Existing child safety seats have only one function and are expensive. Most consumers have to purchase a baby carriage in addition to the child safety seat, and consequentially, the financial burden of consumers is increased, and it is extremely inconvenient to carry both the child safety seat and the baby carriage when the families go out.

In view of this, the applicant provides a frame folding mechanism in the previous application (201921078937.5). The frame folding mechanism comprises a folding control assembly and a front-rear leg rotating assembly, wherein the folding control assembly comprises a bolt, a folding handle connected to the bolt through a folding steel wire, and a folding bolt spring arranged around the bolt; the front-rear leg rotating assembly comprises a first connecting piece and a second connecting piece arranged on a rear leg, the first connecting piece and the second connecting piece are coaxially and rotatably connected to a seat body, and bolt holes allowing the bolt to penetrate through to limit the first connecting piece and the second connecting piece are formed in the first connecting piece and the second connecting piece. When a frame is to be folded, the folding handle is pulled to draw the bolt to disengage from the bolt holes of the first connecting piece and the second connecting piece through a folding steel wire, and at this moment, the first connecting piece and the second connecting piece can rotate freely to fold a front leg assembly and a rear leg assembly; and finally, the folding handle is released, so that the bolt will be automatically inserted into the bolt holes under the resilience force of the bolt spring, and the frame is completely folded. Thus, the frame folding mechanism can be operated only by pulling the folding handle and rotating the front leg assembly and the rear leg assembly, so that operation is convenient.

However, this application has the defect that the seat body cannot be stably clamped on front and rear legs because the front and rear legs are folded on the same side.

Patent document US 2012/119457 A1 discloses an infant car seat, comprising: a base unit having straps to secure said base unit to an automobile seat; a seating unit; wherein said seating unit is removably coupled with said base unit; an extendable handle laterally traversing said seating unit and having two ends, each end connected to the proximal end of one of a pair of substantially parallel adjustable elongated members, wherein the distal end of each substantially parallel adjustable elongated members is pivotally connected to a lateral side of said seating unit; a pair of wheel assemblies each of which is connected to a lateral side of said seating unit, wherein each said wheel assembly further comprises
a first elongated member and a second elongated member, each having a proximal end and a distal end, and each terminating in a spur gear at the proximal ends of said elongated members, wherein said spur gears are operatively meshed; wherein said spur gears are connected with said seating unit such that the longitudinal axes of said spur gears are substantially perpendicular to vertical components of said seating unit;
a latch mechanism that selectively engages with said spur gears to lock and release said gears;
a biasing member connected with at least one elongated member and said seating unit;
a pivoting wheel connector connected with the distal end of each elongated member;
a wheel connected with said pivoting wheel connector.

### Summary of the Invention

The invention is set out in the appended set of claims.

The objective of the invention is to solve the problems mentioned in the description of related art by providing a folding and unfolding mechanism for front and rear leg assemblies of a frame. According to the folding and unfolding mechanism for front and rear leg assemblies of a frame, a rear leg assembly can be driven to be folded reversely when a front leg assembly is folded, that is, the front leg assembly and the rear leg assembly are folded on two sides of a seat body, so that the defect of the prior art that the seat body cannot be stably clamped on front and rear legs because the front and rear legs are folded on the same side is overcome.

The technical solution provided by the invention to fulfill the above objective is as follows:
A folding and unfolding mechanism for front and rear leg assemblies of a frame comprises a folding and unfolding control assembly and a front-rear leg rotating assembly. The front-rear leg rotating assembly comprises a rotating shaft, a rear leg assembly supporting rod and a rear leg assembly rotating rod, wherein the rotating shaft is arranged on a seat body and is used for rotatably connecting a front leg assembly to the seat body; the rear leg assembly supporting rod is used for connecting a rear leg assembly to the seat body; and the rear leg assembly rotating rod is arranged on the front leg assembly and is used for connecting the rear leg assembly to the front leg assembly, so that the rear leg assembly is driven to rotate reversely when the front leg assembly rotates around the rotating shaft.

Wherein, the folding and unfolding control assembly comprises a bolt and a folding handle, wherein the bolt is movably arranged on the seat body and is capable of penetrating through the front leg assembly and the rear leg assembly to fulfill limiting, and the folding handle is connected to the bolt through a folding steel wire to control the movement of the bolt.

In one embodiment, a connecting piece disposed around the rotating shaft is arranged at the end of the front leg assembly and is formed with a first unfolding limit hole and a folding limit hole; and a second unfolding limit hole is formed in the rear leg assembly, and when the front leg assembly and the rear leg assembly are unfolded, the bolt penetrates through the first unfolding limit hole and the second unfolding limit hole.

In one embodiment, a through hole allowing the rotating shaft to penetrate through is formed in the connecting piece, and a clamping protrusion extending towards the center is arranged in the through hole; and a clamping groove is formed in the rotating shaft towards the axis and is matched with the clamping protrusion to drive the rotating shaft to rotate synchronously when the front leg assembly rotates.

Preferably, a limiting groove is formed in the rotating shaft, and a limiting protrusion extends out of the end of the rear leg assembly and is matched with the limiting groove to fulfill limiting when the rear leg assembly is unfolded and to drive the rear leg assembly to be folded through the rotating shaft when the front leg assembly is folded.

Preferably, a folding limit groove is formed in the periphery of the connecting piece and is matched with the end, located on the rear leg assembly, of the rear leg assembly supporting rod, so that when the rear leg assembly is folded, the end of the rear leg assembly supporting rod is clamped in the folding limit groove to fulfill limiting.

In one embodiment, a limiting rod is arranged on the seat body, an arc groove is formed in the connecting piece, and the limiting rod penetrates through the arc groove to limit the rotating angle of the front leg assembly.

In one embodiment, the rear leg assembly supporting rod has an end rotatably connected to the seat body and an end rotatably connected to the rear leg assembly; and the rear leg assembly rotating rod has an end fixed to the front leg assembly and an end rotatably connected to the rear leg assembly.

To fulfill the above objective, the invention further provides a child safety seat which comprises a seat body, a front leg assembly hinged to the seat body, a rear leg assembly hinged to the front leg assembly, and the folding and unfolding mechanism for front and rear leg assemblies of a frame.

Compared with the prior art, the invention has the following effects:
1. According to the folding and unfolding mechanism, the rear leg assembly can be reversely folded when the front leg assembly rotates to be folded, that is, the front leg assembly and the rear leg assembly are folded on two sides of the seat body, so that the problem of the prior art that the seat body cannot be stably clamped on the front and rear leg assemblies because the front and rear leg assemblies are folded on the same side is solved.
2. In an unfolded state, the bolt is inserted into the first unfolding limit hole and the second unfolding limit hole to fulfill limiting; and the limiting groove and the limiting protrusion fulfill further limiting, so that the clamping stability in the unfolded state is guaranteed.
3. In a folded state, the bolt is inserted into the folding limit hole to fulfill limiting, and the end of the rear leg assembly supporting rod is inserted into the folding limit groove to fulfill further limiting, so that the clamping stability in the folded state is guaranteed.
4. The limiting rod is arranged on the seat body, the arc groove is formed in the connecting piece, and the limiting rod can penetrate through the arc groove to limit the rotating angle of the front leg assembly.

### Brief description of the Drawings

To explain the technical solution of the embodiments of the invention more clearly, the drawings used in the description of the embodiments are briefly described below.
FIG. 1 is an exploded view of a child safety seat in one embodiment of the invention;
FIG. 2 is a side view of the child safety seat in an unfolded state in the embodiment of the invention;
FIG. 3 is an enlarged view of part A in FIG. 2;
FIG. 4 is another side view of the child safety seat in the unfolded state in the embodiment of the invention;
FIG. 5 is a folding diagram of the child safety seat in the embodiment of the invention.

### Detailed Description of Embodiments

To make the objectives, technical solutions and advantages of the embodiments of the invention clearer, the technical solution of the embodiments of the invention is clearly and completely described below in combination with the accompanying drawings of the embodiments. Clearly, the embodiments in the following description are only illustrative ones, and are not all possible ones of the invention. All other embodiments obtained by those ordinarily skilled in the art on the basis of these illustrative ones without creative labor should also fall within the protection scope of the invention.

It should be noted that the terms such as "center", "top", "bottom", "left", "right", "vertical", "horizontal", "inner", "outer", "front" and "rear" in the description of the invention are used for indicating directional or positional relations on the basis of the drawings to facilitate and simplify the description of the invention, do not indicate or imply that devices or elements referred to must have specific directions or must be configured and operated in specific directions, and thus should not be interpreted as limitations of the invention. It should also be noted that the child safety seat of the invention is a 0+ seat so that adults can push a baby carriage in the face of a child.

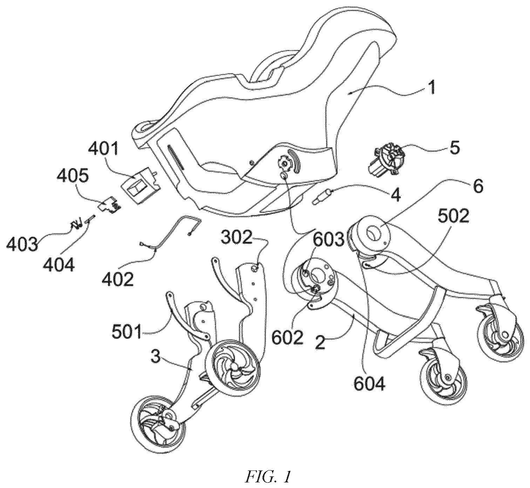

This embodiment provides a child safety seat which comprises a seat body 1, a front leg assembly 2 hinged to the seat body 1, a rear leg assembly 3 hinged to the front leg assembly 2, and a folding and unfolding mechanism for front and rear assemblies of a frame, as shown in FIG. 1-FIG. 4. Wherein, the seat body 1 is an existing product, the structure of which is not specifically limited.

In this embodiment, the folding and unfolding mechanism comprises a folding and unfolding control assembly a front-rear leg rotating assembly, as shown in FIG. 1. The folding and unfolding control assembly comprises a bolt 4 and a folding handle 401.

The bolt 4 is horizontally and movably arranged on the seat body 1 and is able to penetrate through the front leg assembly 2 and the rear leg assembly 3 to fulfill limiting. The bolt 4 is connected to the folding handle 401 through a folding steel wire 402, the folding handle 401 is rotatably arranged on the surface of the seat body 1 through a pin 404 sleeved with a torsion spring 403, and a double lock 405 is arranged on the folding handle 401 through the pin 404 to prevent the seat body from being folded when the folding handle 401 is directly pulled by a child.

In this embodiment, the front-rear leg rotating assembly comprises a rotating shaft 5, a rear leg assembly supporting rod 501 and a rear leg assembly rotating rod 502.

As shown in FIG. 1-FIG. 4, the rotating shaft 5 is arranged on the seat body 1 and is used for hinging the front leg assembly 2 to the seat body 1. Particularly, one end of the rotating shaft 5 stretches out of the seat body 1 to penetrate into a connecting piece 6.

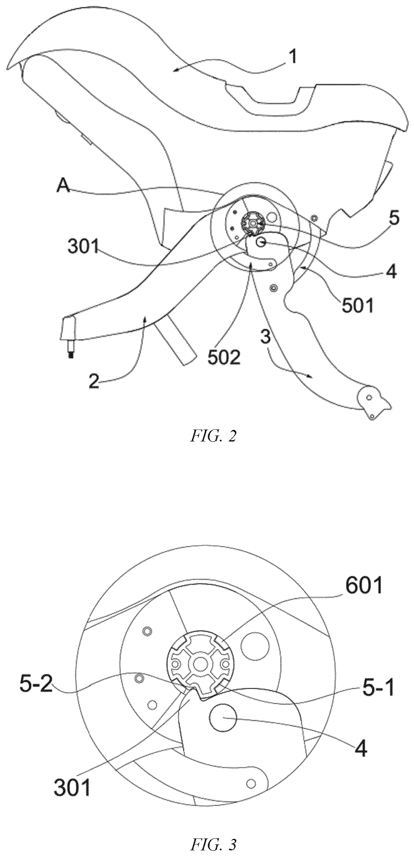

The bottom end of the rear leg assembly supporting rod 501 is rotatably connected to the rear leg assembly 3, and the top end of the rear leg assembly supporting rod 501 is rotatably connected to the rear part of the seat body 1. For example, as shown in FIG. 2 and FIG. 3, the top end of the rear leg assembly supporting rod 501 is connected to the right side of the seat body 1 and is used for connecting the rear leg assembly 3 to the seat body 1. Particularly, the bottom end of the rear leg assembly supporting rod 501 is rotatably connected to the rear leg assembly 3 through a rivet, the top end of the rear leg assembly supporting rod 501 is rotatably connected to the seat body 1 through a screw, and the rotatable connection manner is not limited to those mentioned herein.

The rear leg assembly rotating rod 502 is arranged on the front leg assembly 2, and the right end of the rear leg assembly rotating rod 502 is rotatably connected to the rear leg assembly 3 to hinge the rear leg assembly 3 to the front leg assembly 2. In this embodiment, the rear leg assembly rotating rod 502 provides a rotating force for the rear leg assembly 3, and with the joint of the rear leg assembly supporting rod 501 and the rear leg assembly 3 as a rotating fulcrum, the rear leg assembly 3 rotates reversely when the front leg assembly 2 rotates around the rotating shaft 5.

In this embodiment, the connecting piece 6 is arranged at the top end of the front leg assembly 2. As shown in FIG. 1, the connecting piece 6 is of a disc structure, a through hole allowing the rotating shaft 5 to penetrate through is formed in the center of the connecting piece 6, and the connecting piece 6 is arranged around the rotating shaft 5 to hinge the front leg assembly 2 to the seat body 1.

As shown in FIG. 3, to ensure that the rear leg assembly 3 can rotate reversely when the front leg assembly 2 rotates around the rotating shaft 5, a clamping protrusion 601 extending towards the center is arranged in the through hole, and a clamping groove 5-1 is formed in the rotating shaft 5 towards the axis, and the clamping groove 5-1 is matched with the clamping protrusion 601, that is, the clamping protrusion 601 is inserted into the clamping groove 5-1, so that when the front leg assembly 2 is unfolded/folded, the rotating shaft 5 will be driven to rotate synchronously. In this embodiment, a plurality of clamping protrusions 601 are arranged in the through hole, a plurality of clamping grooves 5-1 are formed in the rotating shaft, the clamping protrusions 601 are in one-to-one correspondence with the clamping grooves 5-1, and the clamping protrusions 601 and the clamping grooves 5-1 are distributed uniformly, so that the rotating stability is guaranteed.

Furthermore, a limiting groove 5-2 is formed in the rotating shaft 5, and a limiting protrusion 301 extends out of the top end of the rear leg assembly 3. When the front and rear leg assemblies are in an unfolded state, the limiting protrusion 301 is clamped in the limiting groove 5-2 to limit the rear leg assembly 3. When rotated to be folded, the front leg assembly 2 drives the connecting piece 6 to rotate, the connecting piece 6 drives the rotating shaft 5 to rotate synchronously through the cooperation of the clamping protrusions 601 and the clamping grooves 5-1, and once the rotating shaft 5 rotates, the limiting protrusion 301 of the rear leg assembly 3 will be pushed to enable the rear leg assembly 3 to rotate anticlockwise, and then the rear leg assembly 3 is folded; and when the front leg assembly 3 continues to rotate to be folded, the rear leg assembly rotating rod 502 continues to press the top of the rear leg assembly 3 downwards, and the rear leg assembly 3 rotates anticlockwise around the rotating fulcrum, that is, the rear leg assembly 3 rotates reversely when the front leg assembly 2 rotates around the rotating shaft 5.

In order to limit the front and rear leg assemblies at unfolded positions when the frame is in an unfolded state, a first unfolding limit hole 602 is formed in the connecting piece 6 as shown in FIG. 1, a second unfolding limit hole 302 is formed in the top of the rear leg assembly 3 as shown in FIG. 2-FIG. 3, and the bolt 4 can penetrate through the first unfolding limit hole 602 and the second unfolding limit hole 302 to limit the rear leg assembly 3.

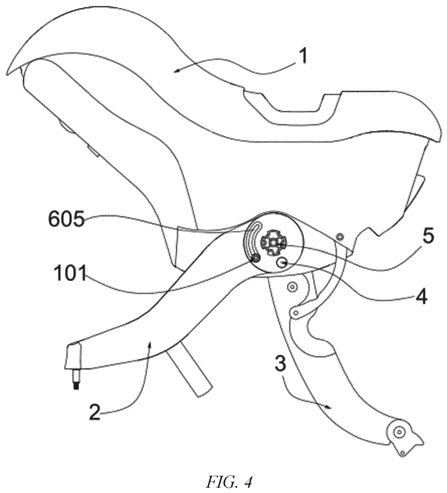

In order to limit the front and rear leg assemblies at folded positions when frame is in a folded state, a folding limit hole 603 is formed in the connecting piece 6 as shown in FIG.1, and the bolt 4 can penetrate through the folding limit hole 603 to limit the front leg assembly 2 as shown in FIG. 4.

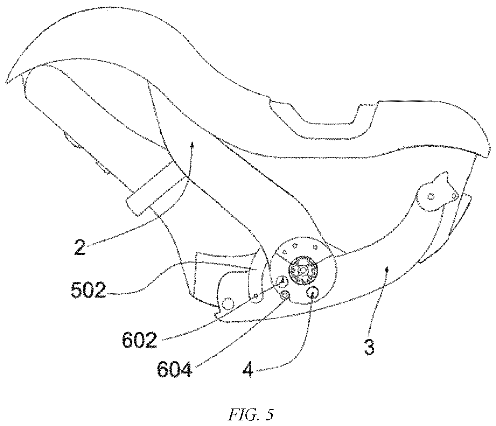

In order to further limit the rear leg assembly 3, a folding limit groove 604 is formed in the periphery of the connecting piece 6 as shown in FIG. 6; and as shown in FIG. 5, the folding limit groove 604 is matched with the end, located on the front leg assembly 3, of the rear leg assembly supporting rod 501, so that when the frame is folded, the end of the rear leg assembly supporting rod 501 is clamped in the folding limit groove 604 to limit the rear leg assembly 3.

In this embodiment, in order to limit the rotating angle of the front leg assembly 2, a limiting rod 101 is arranged on the seat body 1 as shown in FIG. 3, an arc groove 605 is formed in the connecting piece 6, the limiting rod 101 penetrates through the arc groove 605 to limit the rotating angle of the front leg assembly 2, and the included angle between the first unfolding limit hole 602 and the folding limit hole 603 is matched with the radian of the arc groove 605.

In this embodiment, the rear leg assembly 3 and the front leg assembly 2 have been recorded in detail in the previous application (201921078937.5) of the applicant, and thus will no longer be described herein.

The operating principle of the invention is as follows: as shown in FIG. 2 and FIG. 3, when the frame is in the unfolded, the bolt 4 is inserted into the first unfolding limit hole 602 and the second unfolding limit hole 302 to fulfill limiting; when the front and rear leg assemblies need to be folded, the folding handle 401 is pulled to drive the bolt 4 to disengage from the second unfolding limit hole 302 and the first unfolding limit hole 602 through the folding steel wire 402, and at this moment, the front leg assembly 2 can rotate freely.

When the front leg assembly 2 clockwise rotates upwards, the connecting piece 6 drives the rotating shaft 5 to rotate synchronously to push the top of the rear leg assembly 3 to anticlockwise rotate downwards so as to continuously rotate and fold the front leg assembly 2, and the rear leg assembly rotating rod 502 continues to press the top of the rear leg assembly 3 downwards to enable the rear leg assembly 3 to rotate anticlockwise around the rotating fulcrum, so that the front leg assembly 2 and the rear leg assembly 3 are folded synchronously.

When the front leg assembly and rear leg assembly are folded to be in the state shown in FIG. 5, the joint of the rear leg assembly supporting rod 501 and the rear leg assembly 3 is clamped in the folding limit groove 604 to fulfill limiting, then the folding handle 401 is released, and the bolt 4 is inserted into the folding limit hole 603 under the effect of the bolt spring, so that the front leg assembly and the rear leg assembly are limited at the folded positions.

When the front leg assembly and the rear leg assembly need to be unfolded, the folding handle 401 is pulled again to push the bolt 4 out of the folding limit hole 603, and then the rear leg assembly 3 is rotated.

It should be noted that various transformations and improvements can be made by those ordinarily skilled in the art without deviating from the concept of the invention, and all these transformations and improvements should also fall within the protection scope of the invention as long as the modifications fall within the scope of the claims.

## Claims

1. A folding and unfolding mechanism for front and rear leg assemblies of a frame, comprising a folding and unfolding control assembly and a front-rear leg rotating assembly, wherein the front-rear leg rotating assembly comprises:
a rotating shaft (5) adapted to be arranged on a seat body and used for rotatably connecting a front leg assembly (2) to the seat body;
a rear leg assembly supporting rod (501) adapted to be used for connecting a rear leg assembly to the seat body; and
a rear leg assembly rotating rod (502) arranged on the front leg assembly (2) and used for connecting the rear leg assembly to the front leg assembly, so that the rear leg assembly is driven to rotate reversely when the front leg assembly (2) rotates around the rotating shaft;
**characterized in that** the folding and unfolding control assembly comprises:
a bolt (4) adapted to be movably arranged on the seat body and capable of penetrating through the front leg assembly (2) and the rear leg assembly to fulfill limiting; and
a folding handle (401) connected to the bolt (4) through a folding steel wire (402) to control a movement of the bolt (4).

2. The folding and unfolding mechanism for front and rear leg assemblies of a frame according to Claim 1, wherein a connecting piece (6) disposed around the rotating shaft is arranged at an end of the front leg assembly (2), and a first unfolding limit hole (602) and a folding limit hole (603) are formed in the connecting piece; and
a second unfolding limit hole (302) is formed in the rear leg assembly, and when the front and rear leg assemblies are unfolded, the bolt (4) penetrates through the first unfolding limit hole and the second unfolding limit hole to fulfill limiting.

3. The folding and unfolding mechanism for front and rear leg assemblies of a frame according to Claim 2, wherein a through hole allowing the rotating shaft to penetrate through is formed in the connecting piece, and a clamping protrusion (601) extending towards a center is formed in the through hole; and
a clamping groove (5-1) is formed in the rotating shaft towards an axis and is matched with the clamping protrusion (601), so that the rotating shaft is driven to rotate synchronously when the front leg assembly (2) rotates.

4. The folding and unfolding mechanism for front and rear leg assemblies of a frame according to Claim 3, wherein a limiting groove (5-2) is formed in the rotating shaft, and a limiting protrusion (301) extends out of an end of the rear leg assembly and is matched with the limiting groove to fulfill limiting when the rear leg assembly is unfolded and to fold the rear leg assembly through the rotating shaft when the front leg assembly (2) is folded.

5. The folding and unfolding mechanism for front and rear leg assemblies of a frame according to Claim 4, wherein a folding limit groove (604) is formed in a periphery of the connecting piece and is matched with an end, located on the rear leg assembly, of the rear leg assembly supporting rod, so that when the rear leg assembly is folded, the end of the rear leg assembly supporting rod is clamped in the limiting groove (5-2) to fulfill limiting.

6. The folding and unfolding mechanism for front and rear leg assemblies of a frame according to Claim 2, wherein a limiting rod (101) is adapted to be arranged on the seat body, an arc groove is formed in the connecting piece, and the limiting rod (101) penetrates through the arc groove to limit a rotating angle of the front leg assembly (2).

7. The folding and unfolding mechanism for front and rear leg assemblies of a frame according to Claim 1, wherein the rear leg assembly supporting rod has an end adapted to be rotatably connected to the seat body and an end rotatably connected to the rear leg assembly, and the rear leg assembly rotating rod (502) has an end fixed to the front leg assembly (2) and an end rotatably connected to the rear leg assembly.

8. A child safety seat, comprising a seat body (1), a front leg assembly (2) hinged to the seat body, a rear leg assembly hinged to the front leg assembly (2), and the folding and unfolding mechanism for front and rear leg assemblies of a frame according to any one of Claims 1-7.

## Patentansprüche

1. Einklapp- und Ausklappmechanismus für vordere und hintere Beinbaugruppen eines Rahmens, umfassend eine Einklapp- und Ausklapp-Steuerbaugruppe und eine vordere-hintere Beindrehbaugruppe, wobei die vordere-hintere Beindrehbaugruppe Folgendes umfasst:
eine Drehwelle (5), die so angepasst ist, dass sie an einem Sitzkörper angeordnet ist und verwendet wird, um eine vordere Beinbaugruppe (2) drehbar mit dem Sitzkörper zu verbinden;
eine Stützstange (501) für eine hintere Beinbaugruppe, die so angepasst ist, dass sie zum Verbinden einer hinteren Beinbaugruppe mit dem Sitzkörper verwendet werden kann; und
eine an der vorderen Beinbaugruppe (2) angeordnete Drehstange (502) der hinteren Beinbaugruppe, die zum Verbinden der hinteren Beinbaugruppe mit der vorderen Beinbaugruppe verwendet wird, so dass die hintere Beinbaugruppe dazu angetrieben wird, sich umgekehrt zu drehen, wenn sich die vordere Beinbaugruppe (2) um die Drehwelle dreht;
**dadurch gekennzeichnet, dass**
die Einklapp- und Ausklapp-Steuerbaugruppe Folgendes umfasst:
ein Bolzen (4), der so angepasst ist, dass er beweglich am Sitzkörper angeordnet ist und durch die vordere Beinbaugruppe (2) und die hintere Beinbaugruppe hindurchdringen kann, um die Begrenzung zu erfüllen; und
einen Einklappgriff (401), der über einen Einklappstahldraht (402) mit dem Bolzen (4) verbunden ist, um eine Bewegung des Bolzens (4) zu steuern.

2. Einklapp- und Ausklappmechanismus für vordere und hintere Beinbaugruppen eines Rahmens nach Anspruch 1, wobei ein um die Drehwelle angeordnetes Verbindungsstück (6) an einem Ende der vorderen Beinbaugruppe (2) angeordnet ist und ein erstes Ausklappbegrenzungsloch (602) und ein Einklappbegrenzungsloch (603) im Verbindungsstück gebildet sind; und
ein zweites Ausklappbegrenzungsloch (302) in der hinteren Beinbaugruppe gebildet ist, und wenn die vorderen und hinteren Beinbaugruppen ausgeklappt sind, dringt der Bolzen (4) durch das erste Ausklappbegrenzungsloch und das zweite Ausklappbegrenzungsloch, um die Begrenzung zu erfüllen.

3. Einklapp- und Ausklappmechanismus für vordere und hintere Beinbaugruppen eines Rahmens nach Anspruch 2, wobei in dem Verbindungsstück ein Durchgangsloch gebildet ist, durch das die Drehwelle eindringen kann, und in dem Durchgangsloch ein sich in Richtung einer Mitte erstreckender Klemmvorsprung (601) gebildet ist; und eine Klemmnut (5-1) in der Drehwelle zu einer Achse gebildet ist und mit dem Klemmvorsprung (601) übereinstimmt, so dass die Drehwelle beim Drehen der vorderen Beinbaugruppe (2) synchron zur Drehung angetrieben wird.

4. Einklapp- und Ausklappmechanismus für vordere und hintere Beinbaugruppen eines Rahmens nach Anspruch 3, wobei eine Begrenzungsnut (5-2) in der Drehwelle gebildet ist und ein Begrenzungsvorsprung (301) sich aus einem Ende der hinteren Beinbaugruppe erstreckt und mit der Begrenzungsnut abgestimmt ist, um die Begrenzung zu erfüllen, wenn die hintere Beinbaugruppe ausgeklappt ist, und um die hintere Beinbaugruppe durch die Drehwelle einzuklappen, wenn die vordere Beinbaugruppe (2) eingeklappt ist.

5. Einklapp- und Ausklappmechanismus für vordere und hintere Beinbaugruppen eines Rahmens nach Anspruch 4, wobei eine einklappbare Begrenzungsnut (604) in einem Umfang des Verbindungsstücks gebildet ist und mit einem an der hinteren Beinbaugruppe befindlichen Ende der Stützstange der hinteren Beinbaugruppe abgeglichen ist, so dass beim Einklappen der hinteren Beinbaugruppe das Ende der Stützstange der hinteren Beinbaugruppe in der Begrenzungsnut (5-2) eingeklemmt ist, um die Begrenzung zu erfüllen.

6. Einklapp- und Ausklappmechanismus für vordere und hintere Beinbaugruppen eines Rahmens nach Anspruch 2, wobei eine Begrenzungsstange (101) angepasst ist, um an dem Sitzkörper angeordnet zu sein, in dem Verbindungsstück eine Bogennut gebildet ist und die Begrenzungsstange (101) durch die Bogennut hindurchdringt, um einen Drehwinkel der vorderen Beinbaugruppe (2) zu begrenzen.

7. Einklapp- und Ausklappmechanismus für vordere und hintere Beinbaugruppen eines Rahmens nach Anspruch 1, wobei die Stützstange der hinteren Beinbaugruppe ein Ende aufweist, das so angepasst ist, dass sie drehbar mit dem Sitzkörper verbunden ist, und ein Ende drehbar mit der hinteren Beinbaugruppe verbunden ist, und die Drehstange der hinteren Beinbaugruppe (502) ein Ende aufweist, das an der vorderen Beinbaugruppe (2) befestigt ist, und ein Ende drehbar mit der hinteren Beinbaugruppe verbunden ist.

8. Kindersitz, umfassend einen Sitzkörper (1), eine an dem Sitzkörper angeschlagene vordere Beinbaugruppe (2), eine an der vorderen Beinbaugruppe (2) angeschlagene hintere Beinbaugruppe und den Einklapp- und Ausklappmechanismus für vordere und hintere Beinbaugruppen eines Rahmens nach einem der Ansprüche 1 bis 7.

## Revendications

1. Mécanisme de pliage et de dépliage pour ensembles jambes avant et arrière d'un cadre, comprenant un ensemble de commande de pliage et de dépliage et un ensemble rotatif de jambes avant-arrière, dans lequel l'ensemble rotatif de jambes avant-arrière comprend :
un arbre rotatif (5) adapté pour être agencé sur un corps de siège et utilisé pour raccorder de manière rotative un ensemble jambe avant (2) au corps de siège ;
une tige de support d'ensemble jambe arrière (501) adaptée pour être utilisée pour raccorder un ensemble jambe arrière au corps de siège ; et
une tige rotative d'ensemble jambe arrière (502) agencée sur l'ensemble jambe avant (2) et utilisée pour raccorder l'ensemble jambe arrière à l'ensemble jambe avant, de sorte que l'ensemble jambe arrière soit entraîné en rotation en sens inverse lorsque l'ensemble jambe avant (2) tourne autour de l'arbre rotatif ;
**caractérisé en ce que**
l'ensemble de commande de pliage et de dépliage comprend :
un boulon (4) adapté pour être agencé de manière mobile sur le corps de siège et apte à pénétrer à travers l'ensemble jambe avant (2) et l'ensemble jambe arrière pour satisfaire une limitation ; et
une poignée de pliage (401) raccordée au boulon (4) par un fil d'acier pliable (402) pour commander un mouvement du boulon (4).

2. Mécanisme de pliage et de dépliage pour ensembles jambes avant et arrière d'un cadre selon la revendication 1, dans lequel une pièce de raccordement (6) disposée autour de l'arbre rotatif est agencée à une extrémité de l'ensemble jambe avant (2), et un premier trou de limitation de dépliage (602) et un trou de limitation de pliage (603) sont formés dans la pièce de raccordement ; et
un deuxième trou de limitation de dépliage (302) est formé dans l'ensemble jambe arrière, et lorsque les ensembles jambes avant et arrière sont dépliés, le boulon (4) pénètre à travers le premier trou de limitation de dépliage et le deuxième trou de limitation de dépliage pour satisfaire une limitation.

3. Mécanisme de pliage et de dépliage pour ensembles jambes avant et arrière d'un cadre selon la revendication 2, dans lequel un trou traversant permettant à l'arbre rotatif de pénétrer à travers celui-ci est formé dans la pièce de raccordement, et une saillie de serrage (601) s'étendant vers un centre est formée dans le trou traversant ; et une rainure de serrage (5-1) est formée dans l'arbre rotatif vers un axe et correspond à la saillie de serrage (601), de sorte que l'arbre rotatif est entraîné en rotation synchrone lorsque l'ensemble jambe avant (2) tourne.

4. Mécanisme de pliage et de dépliage pour ensembles jambes avant et arrière d'un cadre selon la revendication 3, dans lequel une rainure de limitation (5-2) est formée dans l'arbre rotatif, et une saillie de limitation (301) s'étend à partir d'une extrémité de l'ensemble jambe arrière et correspond à la rainure de limitation pour satisfaire une limitation lorsque l'ensemble jambe arrière est déplié et pour plier l'ensemble jambe arrière à travers l'arbre rotatif lorsque l'ensemble jambe avant (2) est plié.

5. Mécanisme de pliage et de dépliage pour ensembles jambes avant et arrière d'un cadre selon la revendication 4, dans lequel une rainure de limitation de pliage (604) est formée dans une périphérie de la pièce de raccordement et correspond à une extrémité, située sur l'ensemble jambe arrière, de la tige de support d'ensemble jambe arrière, de sorte que lorsque l'ensemble jambe arrière est plié, l'extrémité de la tige de support d'ensemble jambe arrière est serrée dans la rainure de limitation (5-2) pour satisfaire une limitation.

6. Mécanisme de pliage et de dépliage pour ensembles jambes avant et arrière d'un cadre selon la revendication 2, dans lequel une tige de limitation (101) est adaptée pour être agencée sur le corps de siège, une rainure en arc est formée dans la pièce de raccordement, et la tige de limitation (101) pénètre à travers la rainure en arc pour limiter un angle de rotation de l'ensemble jambe avant (2).

7. Mécanisme de pliage et de dépliage pour ensembles jambes avant et arrière d'un cadre selon la revendication 1, dans lequel la tige de support d'ensemble jambe arrière a une extrémité adaptée pour être raccordée en rotation au corps de siège et une extrémité raccordée en rotation à l'ensemble jambe arrière, et la tige rotative d'ensemble jambe arrière (502) a une extrémité fixée à l'ensemble jambe avant (2) et une extrémité raccordée en rotation à l'ensemble jambe arrière.

8. Siège de sécurité pour enfant, comprenant un corps de siège (1), un ensemble jambe avant (2) articulé sur le corps de siège, un ensemble jambe arrière articulé sur l'ensemble jambe avant (2), et le mécanisme de pliage et de dépliage pour ensembles jambes avant et arrière d'un cadre selon l'une quelconque des revendications 1 à 7.
